# EUROPEAN PATENT SPECIFICATION

(11) **EP 0 475 583 B1**
(45) Date of publication and mention of the grant of the patent: **29.12.1993**
(21) Application number: 91307281.5
(22) Date of filing: 08.08.1991
(51) Int. Cl.: A01D 45/00, A47J 43/25

(54) **Trimming apparatus**
Schneidvorrichtung
Dispositif de coupe

(30) Priority: 14.09.1990 GB 9020163
(43) Date of publication of application: 18.03.1992
(73) Proprietor: MIDDLEBROOK MUSHROOMS LIMITED, Market Harborough, Leicestershire LE16 7DE (GB)
(72) Inventor: Pearce, Arthur Harold, Market Harborough, Leics. LE16 7DE (GB)
(74) Representative: Drever, Ronald Fergus

(56) References cited:
- FR-A- 2 288 483
- GB-A- 137 180
- US-A- 2 714 908

## Description

This invention concerns trimming apparatus, and relates in particular to apparatus especially but not exclusively suitable for use in the harvesting and trimming by hand of vegetables and other produce, notably mushrooms.

In the production of mushrooms on a commercial scale, they are generally grown on a number of long shelves or trays arranged one above the other. Access to the shelves is by means of either steps or a travelling platform positioned alongside the shelves. The produce is normally harvested by hand, the roots of collected mushrooms being trimmed off by a knife as they are picked, and the roots and the mushrooms then each being placed in separate collecting bags carried by the harvester. Naturally, this method only permits mushrooms to be picked with one hand, the other being used to hold the knife and trim the roots.

The present invention seeks to mitigate or obviate this disadvantage by providing an apparatus the use of which permits each hand to be used simultaneously for both picking and trimming, thus allowing faster and easier harvesting. Although the apparatus will be described particularly in relation to mushroom harvesting, it will be appreciated that its use is not limited to this field.

According to the invention there is provided trimming apparatus having a body structure mounting a blade arrangement and means providing a passage for delivering material cut by the blade to a remote location characterised in that a non-movable blade is supported on the apparatus to overlie one open end of the passage and the body structure has means for releasably mounting same on a fixture whereby to enable the apparatus to be releasably mounted at a supply location for the material to be trimmed, the mounting means being so positioned that the blade may be at a suitable operating height between the supply location and an operator whereby to enable the operator to cut material by means of the blade.

The mounting means may be at least one suitable hook or clip mounted on the body section to enable the latter to be positioned over the edge of the fixture. Preferably there is also provided bracing means to stabilise the apparatus against the fixture.

The body structure may comprise an open framework. Preferably, however, the apparatus incorporates a substantially closed hollow body or shell, for example of a plastics material. More preferably the body comprises two portions; a first body portion and a second holster portion, the first body portion being mountable within the holster portion. The said one open end of the passage may be defined by an end of the first body portion, the blade being mounted on the first body portion. The holster may define another open end of the passage, and may further provide means for supporting a collecting container adjacent said other open end to receive material cut by the blade. Preferably the first body portion may be mounted within the holster in any of a plurality of different relative positions thereto such that the relative position of the blade on the apparatus may be varied.

Preferably the blade extends across substantially the entire width of the said one open end of the passage. Preferably the blade has two oppositely directed cutting edges, to permit the trimming of produce presented to the blade from either side.

The invention will now be described in further detail by way of illustration only with reference to the accompanying drawings, in which:-
Fig. 1 is a simplified perspective view of a first embodiment of the invention;
Fig. 2 is a rear view of a second embodiment;
Fig. 3 is a side view of the embodiment of Fig. 2;
Fig. 4 is a side view of a third embodiment;
Fig. 5 is a simplified perspective view of a fourth embodiment; and
Fig. 6 is a side view on a reduced scale of the embodiment of Fig. 5 in use.

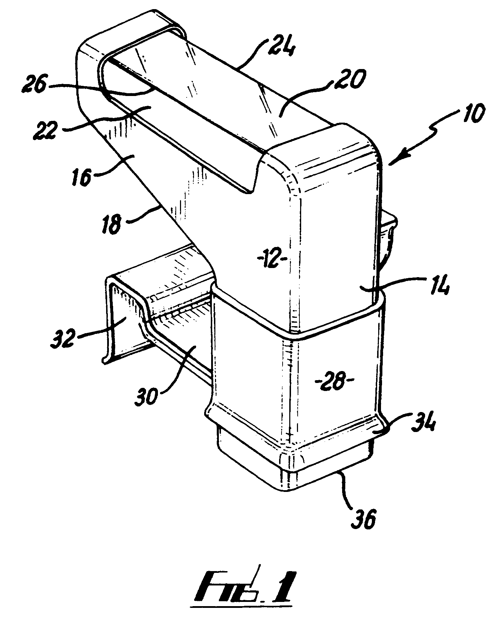

Referring to Fig. 1, there is shown a trimming apparatus adapted for use in mushroom harvesting. The apparatus has a hollow plastics body 10 composed of two sections, a first section 12 and a second holster section 28. The first section 12, which in use is uppermost, has a stem 14 of generally square section one side of the upper end of which is extended laterally to form a shallow trough-like part 16. The latter has an upper side extending substantially normally to the stem 14, and a base 18 inclined downwardly towards the stem 14 from the outer end of the trough 16. A blade 20 is mounted on the body portion 12 to overlie an opening 22 in the upper side of the trough 16. The blade 20 has two opposed cutting edges, 24 and 26.

The stem 14 of the section 12 is supported within the holster 28. A clip 30 projects from one side of the holster 28 to provide a substantially inverted 'U' shaped channel 32 which may be located over an upstanding wall (not shown) defining the edge of a mushroom growing shelf. The apparatus may thus be mounted for use adjacent the growing area which is to be harvested. A projecting ridge 34 extends around a lower edge 36 of the holster 28. The mouth of a collecting bag or sack (not shown) may be secured to the holster 28 by means of an elastically deformable band or 'O' ring (not shown) positioned over the ridge 34.

The apparatus may be mounted on the end wall of a mushroom shelf by means of the clip 30. The blade 20 is thus supported for use adjacent the working area, and a knife does not need to be separately carried. Both hands may therefore be used for picking mushrooms, and directly as they are picked their roots may be removed by slicing them across the blade 20. Either edge of the blade 20 may be used, thus allowing mushrooms to be cut from either side. The roots so removed will fall into the trough 16 and down the inclined base 18 to the stem 14 and thus into a collecting sack located adjacent the edge 36 of the holster 28. The trimmed mushrooms may then be deposited in a separate container of any suitable kind already known for this purpose. As the harvesting continues, the apparatus may be moved along the wall of the shelf to the most convenient position.

The upper body section 12 may be mounted within the holster 28 in any of three different orientations. The section 12 may, as shown in Fig. 1, be positioned such that the trough 16 overlies the clip 30 and extends substantially normally to a wall of the shelf. Alternatively, the section 12 may be removed from the holster 28, rotated through 90° in either direction and replaced so that the trough 16 will in use extend substantially parallel to the shelf wall. Thus, the most convenient or comfortable orientation may be chosen depending upon the individual or the circumstances.

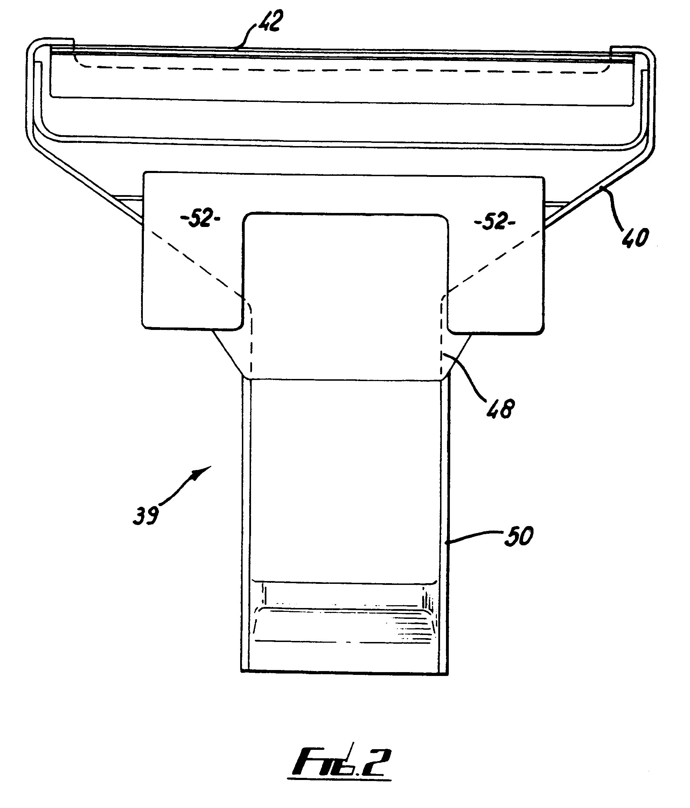

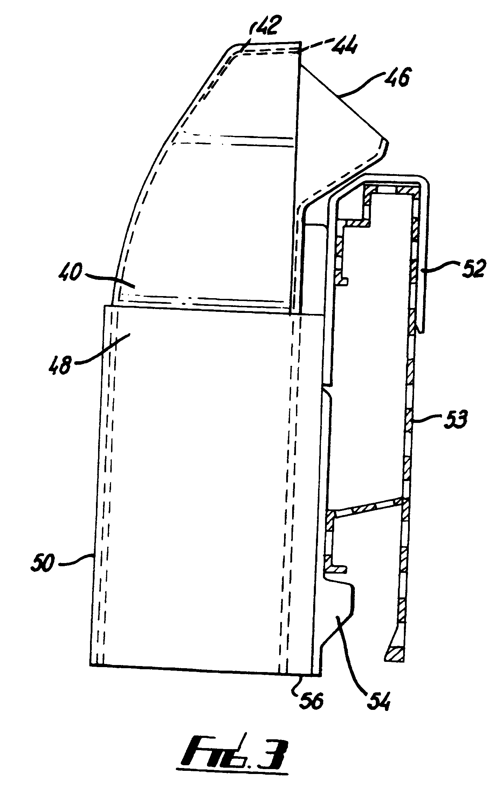

Figs. 2 and 3 illustrate an alternative embodiment, having a hollow plastics material body 39 formed with an upper body portion 40 and a holster 50. The upper body portion 40 has a blade 42 mounted laterally at one side of an opening 46 therein. The blade 42 has a single cutting edge 44, and is located such that materials cut with the blade 42 can fall into the opening 46. A stem 48 extends from one side of the body portion 40 and is releasably locatable within the holster 50. A hook 52 is provided on the holster 50 to permit the apparatus to be mounted on a wall 53 (not shown in Fig. 2) of the shelf or on some other fixture. A projection 54 is located adjacent a lower edge 56 of the holster 50 to facilitate the mounting of the mouth of a collecting bag or sack (not shown) thereover, for example by means of an elastically-deformable band. Materials falling from the blade 42 may thus pass through the upper body portion 40 and the stem 48 into the collecting sack.

In a modification of the device having a simpler construction, a hook may be provided directly on the stem 48 of the body of the apparatus, and no separate holster provided.

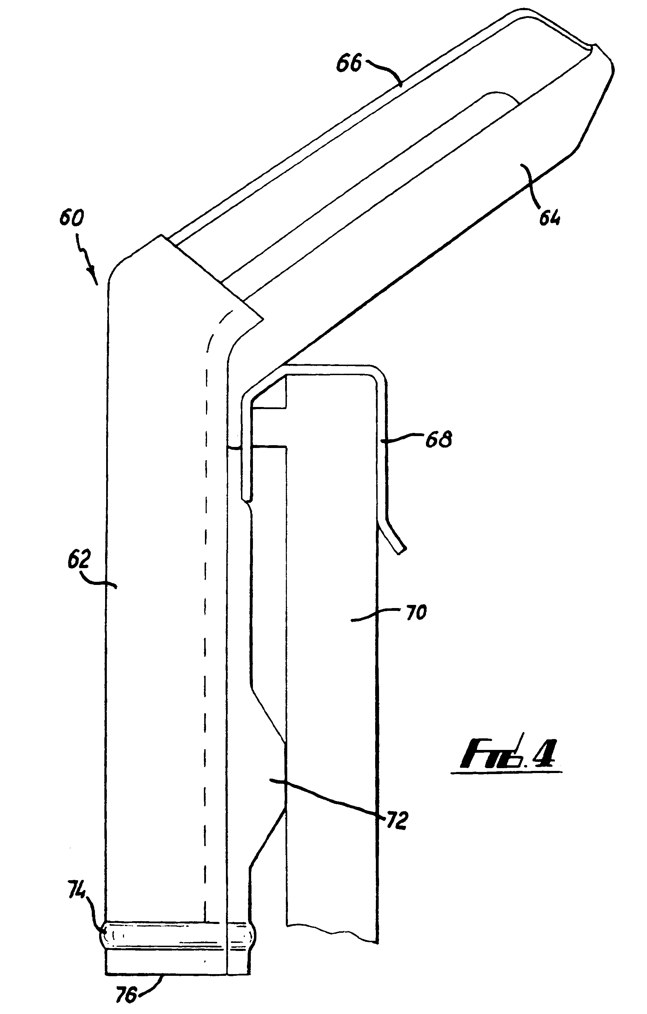

Fig. 4 illustrates a further embodiment having a body portion 60 with an elongate tubular stem 62 which lies substantially vertically when the apparatus is in use. A blade retaining section 64 projects upwardly from the stem 62 at an angle of approximately 120°. A blade 66 is mounted on the section 64 to extend along substantially the entire length thereof. A clip 68 is mounted on the body portion 60 adjacent the intersection of the stem 62 and the blade retaining portion 64. The clip 68 provides an inverted substantially 'U' shaped channel which may be mounted over a fixture 70 to support the apparatus thereon. A projection 72 on the same side of the stem 62 as the section 64 provides a bracing member which in use abuts the fixture 70. A retaining ridge 74 extends around the stem 62 adjacent an edge 76 thereof to facilitate the attachment of a collecting container (not shown).

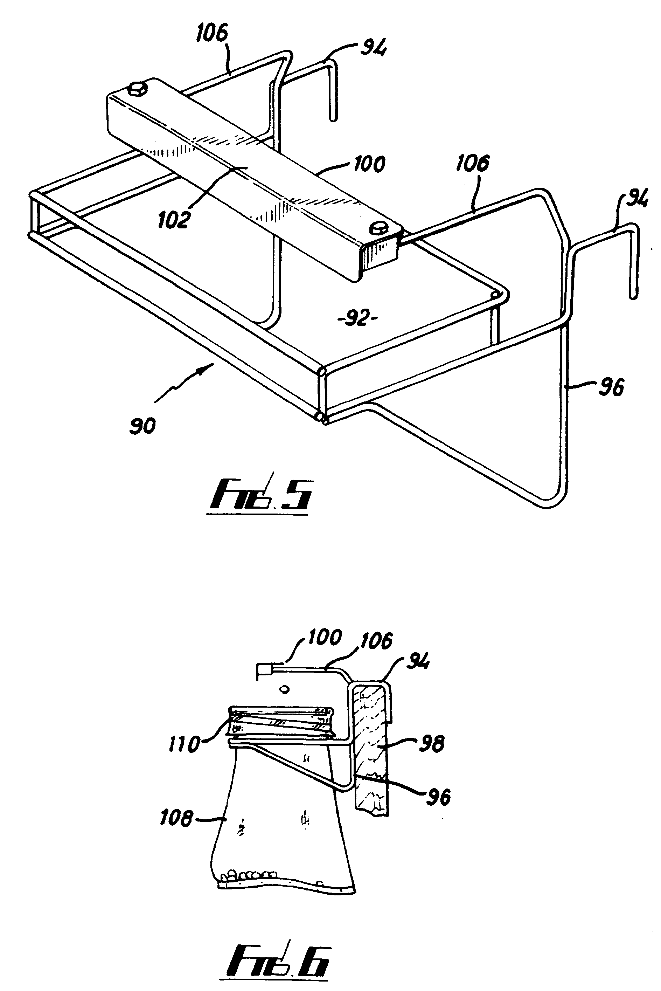

Figs. 5 and 6 show a further embodiment having a body in the form of an open metal framework 90. The frame 90 defines a shallow substantially rectangular passage 92. A pair of U-shaped hooks 94 are supported on frame members 96 outside the passage 92 so that the apparatus may be supported on a vertical wall 98 (shown in Fig. 6 only) with the passage-defining frame members lying substantially horizontally and spaced from the wall 98, as shown in Fig. 6. The suspended apparatus is braced by frame members 96 which abut the wall 98. A blade 100 within a housing 102 is mounted on supporting bars 106 so that the blade 100 lies generally within the confines of the passage 92 but is vertically displaced thereabove when the apparatus is supported for use by hooks 94.

The mouth of a collecting sack 108 is passed from below through the passage 92 in the frame towards the blade 100, and is then folded back over the surrounding frame members, to which the sack 108 may be secured by means of an elastically deformable band 110. The blade 100 is accordingly in use positioned above the opened mouth of the collecting sack 108.

There is thus described apparatus which is convenient to use, being mountable adjacent the area to be harvested and freeing both hands for picking mushrooms and trimming them on the blade of the apparatus.

Various modifications may be made without departing from the invention as defined in the claims. The body or frame of the apparatus may be of a configuration and shape different to those described and shown and may be made from any suitable materials. The blade may be constructed or mounted in any appropriate way. Any suitable collecting container known or proposed for the purpose may be used, and the means for supporting the container may be varied from the arrangement of the described embodiments. Alternatively, the material may be delivered by the passage to a conveyor or to a further processing stage.

## Claims

1. Trimming apparatus having a body structure mounting a blade arrangement and means providing a passage for delivering material cut by the blade to a remote location characterised in that a non-movable blade (20,42,66,100) is supported on the apparatus to overlie one open end (22,46) of the passage, and the body structure (10,39,60,90) has means (30,52,68) for releasably mounting same on a fixture (53,70,98) to enable the apparatus to be releasably mounted at a supply location for the material to be trimmed, the mounting means (30,52,68) is so positioned that the blade may be at a suitable operating height between the supply location and an operator to enable the operator to cut material by means of the blade.

2. Apparatus according to claim 1, characterised in that the mounting means comprises at least one hook (30,52,68,94) mounted on the body section.

3. Apparatus according to claim 2, characterised in that there is provided bracing means (72,96) to stablise the apparatus against the fixture (53,70,98).

4. Apparatus according to any of the preceding claims, characterised in that the body structure comprises a substantially closed shell.

5. Apparatus according to claim 4, characterised in that the body comprises two portions; a first body portion (12,40) and a second holster (28,50) portion, the first body portion being mountable within the holster.

6. Apparatus according to claim 5, characterised in that the said one open end (22) of the passage is defined by an end of the first body portion (12), the blade (20) being mounted on the first body portion.

7. Apparatus according to claim 5 or claim 6, characterised in that the holster (28,50) defines another open end of the passage.

8. Apparatus according to any of claims 5 to 7, characterised in that the first body portion (12) is mountable within the holster (28) in any of a plurality of different relative positions such that the relative position of the blade (20) on the apparatus may be varied.

9. Apparatus according to any of claims 1 to 3, characterised in the body structure comprises an open framework (90).

10. Apparatus according to any of the preceding claims, characterised in that the blade extends across substantially the entire width of the said one open end of the passage.

11. Apparatus according to any of the preceding claims, characterised in that the blade has two oppositely directed cutting edges (24,26).

12. Apparatus according to any of the preceding claims, characterised in that there is provided means (110) for mounting a collecting container on the apparatus to receive material cut by the blade.

## Patentansprüche

1. Schneidvorrichtung mit einer eine Klingenanordnung tragenden Körperstruktur und mit Mitteln, die einen Durchgang zum Abführen von durch die Klinge abgeschnittenem Material zu einer entfernten Stelle bilden, dadurch gekennzeichnet, daß eine unbewegliche Klinge (20,42.66.100) an der Vorrichtung gehalten ist, die ein offenes Ende (22,46) des Durchgangs übergreift, und die Körperstruktur (10,39,60,90) Mittel (30,52,68) zu ihrem lösbaren Befestigen an einem Halteteil (53,70;98) aufweist, um die Vorrichtung an einer Vorratsstelle für das zu schneidende Material lösbar befestigen zu können, wobei die Befestigungsmittel so positioniert sind, daß die Klinge in einer geeigneten Arbeitshöhe zwischen der Vorratsstelle und einer Arbeitsperson sein kann, um der Arbeitsperson das Schneiden von Material mittels der Klinge zu ermöglichen.

2. Vorrichtung nach Anspruch 1, dadurch gekennzeichnet, daß die Befestigungsmittel mindestens einen an der Körperstruktur angeordneten Haken (30,52,68,94) aufweisen.

3. Vorrichtung nach Anspruch 2, dadurch gekennzeichnet, daß Stützmittel (72,96) zum Stabilisieren der Vorrichtung gegen das Halteteil (53,70,98) vorgesehen sind.

4. Vorrichtung nach einem der vorstehenden Ansprüche, dadurch gekennzeichnet, daß die Körperstruktur ein im wesentlichen geschlossenes Gehäuse enthält.

5. Vorrichtung nach Anspruch 4, dadurch gekennzeichnet, daß der Körper zwei Partien aufweist; eine erste Körperpartie (12,40) und eine zweite Holsterpartie (28,50), wobei die erste Körperpartie in der Holsterpartie befestigbar ist.

6. Vorrichtung nach Anspruch 5, dadurch gekennzeichnet, daß das eine offene Ende (22) des Durchgangs von einem Ende der ersten Körperpartie (12) gebildet wird, wobei die Klinge (20) an der ersten Körperpartie angebracht ist.

7. Vorrichtung nach Anspruch 5 oder 6, dadurch gekennzeichnet, daß die Holsterpartie (28,50) ein anderes offenes Ende des Durchgangs bildet.

8. Vorrichtung nach einem der Ansprüche 5 bis 7, dadurch gekennzeichnet, daß die erste Körperpartie (12) in der Holsterpartie (28) in jeder einer Mehrzahl verschiedener Relativpositionen befestigbar ist, so daß die Relativposition der Klinge an der Vorrichtung verändert werden kann.

9. Vorrichtung nach einem der Ansprüche 1 bis 3, dadurch gekennzeichnet, daß die Körperstruktur ein offenes Gestell (90) enthält.

10. Vorrichtung nach einem der vorstehenden Ansprüche, dadurch gekennzeichnet, daß sich die Klinge im wesentlichen über die gesamte Breite des einen offenen Endes des Durchgangs erstreckt.

11. Vorrichtung nach einem der vorstehenden Ansprüche, dadurch gekennzeichnet, daß die Klinge zwei entgegengesetzt gerichtete Schneidkanten (24,26) aufweist.

12. Vorrichtung nach einem der vorstehenden Ansprüche, dadurch gekennzeichnet, daß Mittel (110) zum Befestigen eines das durch die Klinge abgeschnittene Material aufnehmenden Sammelbehälters an der Vorrichtung vorgesehen sind.

## Revendications

1. Dispositif de dressage, comportant une structure de corps servant au montage d'un dispositif à lame et des moyens offrant un passage pour l'amenée d'un matériau, coupé par la lame en un emplacement situé à distance, **caractérisé en ce qu'**une lame non-mobile (20,42,66,100) est supportée sur le dispositif, en vue de recouvrir une extrémité ouverte (22,46) du passage et la structure de corps (10,39,60,90) présente des moyens (30,52,68) destinés à assurer son montage amovible sur une fixation (53,70,98), de manière à permettre au dispositif d'être monté amovible en un emplacement d'alimentation du matériau à dresser, le moyen de montage (30,52,68) est positionné de telle façon que la lame peut être placée à une hauteur fonctionnelle appropriée, entre l'emplacement d'alimentation et un opérateur, de manière à permettre à ce dernier de couper le matériau au moyen de la lame.

2. Dispositif selon la revendication 1, caractérisé en ce que le moyen de montage comprend au moins un crochet (30,52,68,94) monté sur la section de corps.

3. Dispositif selon la revendication 2, caractérisé en ce qu'il est prévu un moyen d'entretoisement (72,96) destiné à stabiliser le dispositif contre la fixation (53,70,98).

4. Dispositif selon l'une quelconque des revendications précédentes, caractérisé en ce que la structure de corps comprend une enveloppe pratiquement fermée.

5. Dispositif selon la revendication 4, caractérisé en ce que le corps comprend deux parties, une première partie de corps (12,40) et une deuxième partie (28,50) en étui à revolver, la première partie étant susceptible d'être montée dans l'étui.

6. Dispositif selon la revendication 5, caractérisé en ce que ladite une extrémité ouverte (22) du passage est définie par une extrémité de la première partie de corps (12), la lame (20) étant montée sur la première partie de corps.

7. Dispositif selon la revendication 5 ou 6, caractérisé en ce que la partie (28,50) en étui à revolver définit une autre extrémité ouverte du passage.

8. Dispositif selon l'une quelconque des revendications 5 à 7, caractérisé en ce que la première partie (12) est susceptible d'être montée à l'intérieur de la deuxième partie (28,50) en étui à révolver, dans l'une quelconque d'une pluralité de positions relatives différentes, de telle façon que la position relative de la lame (20) sur le dispositif puisse être modifiée.

9. Dispositif selon l'une quelconque des revendications 1 à 3, caractérisé en ce que la structure de corps comprend un châssis ouvert (90).

10. Dispositif selon l'une quelconque des revendications précédentes, caractérisé en ce que la lame s'étend sur, pratiquement, toute la largeur de ladite une extrémité ouverte du passage.

11. Dispositif selon l'une quelconque des revendications précédentes, caractérisé en ce que la lame comporte deux bords de coupe (24,26) orientés à l'opposé.

12. Dispositif selon l'une quelconque des revendications précédentes, caractérisé en ce qu'il est prévu des moyens (110) pour assurer le montage d'un récipient collecteur sur le dispositif, en vue de recevoir le matériau coupé par la lame.
